# EUROPEAN PATENT SPECIFICATION

(11) **EP 0 339 872 B1**
(45) Date of publication and mention of the grant of the patent: **05.01.1994**
(21) Application number: 89303945.3
(22) Date of filing: 20.04.1989
(51) Int. Cl.: B60C 3/04

(54) **Pneumatic tyre**
Luftreifen
Bandage pneumatique

(30) Priority: 22.04.1988 JP 101010/88; 11.05.1988 JP 115393/88
(43) Date of publication of application: 02.11.1989
(73) Proprietor: SUMITOMO RUBBER INDUSTRIES LIMITED, Chuo-ku Kobe-shi Hyogo 651 (JP)
(72) Inventor: Takehara, Kenji, Kobe-shi Hyogo-ken (JP); Saitou, Kenji, Kobe-shi Hyogo-ken (JP)
(74) Representative: Stewart, Charles Geoffrey

(56) References cited:
- EP-A- 0 016 229
- EP-A- 0 194 108
- EP-A- 0 202 788
- DE-A- 2 541 504
- FR-A- 2 499 473
- FR-A- 2 575 423

## Description

The present invention relates to a pneumatic radial tyre.

Tyres of radial structure in which the carcass cords are arranged substantially at the right angles to the equatorial plane of the tyre are widely used because of their superior wear resistance and steering stability.

Such radial tyres are strengthened in the tread region by a hoop effect resulting from a so called belt formed outside the carcass by arranging organic or inorganic material cords at relatively small angles to the equatorial plane of the tyre.

The shape of these radial tyres has been designed as a spontaneously balanced shape in which the carcass profile is not changed from that in the vulcanising mould to that when the tyre is inflated to its standard internal pressure.

Here, the term spontaneously balanced shape means a carcass profile obtained by the theory of spontaneously balanced shape which was proposed by W Hofferberth in Kautsen. Gummi (8-1955, 124 to 130).

In this theory, the belt located in the tread portion of the tyre is regarded as a stiff ring body which does not change its shape when the internal pressure is increased, and it is intended to preliminarily form the carcass which extends between this belt and the bead cores which also does not change its shape, by using a vulcanising mould which is shaped so that no deformation is generated when the moulded tyre is subsequently inflated.

In addition the carcass profile based on the theory of spontaneously balanced shape is formed with the intention of having no deformation when the tyre is inflated by causing the tensile forces to act evenly on the carcass cords.

The original Hofferberth theory related to bias tyres, it was developed by Akasaka in "The sectional shape of the radial tyre", Japan Composite Material Magazine Vol. 3,4 (1977), 149 to 154, so as to be applicable also to the true radial tyre.

For this application of the theory of the spontaneously balanced shape, it is necessary to understand at least the following two facts.

In the first place, the belt is not a perfectly stiff body in practice even when composed of metallic cords, but may be slightly deformed by the application of internal pressure. In particular, the smaller the tyre aspect ratio is, the more the belt is likely to be deformed by the push-up of the carcass due to its inflation by internal pressure.

In the second place, the bead portion is stiffened by the turnup parts of the carcass the bead apex and other bead reinforcing layers, and the theory of spontaneously balanced shape thus cannot be applied in the region from the bead core to the inflextion point of the carcass profile which is generally called the rim point. Thus the equivalent bead position, and therefore, the curve based on the theory should be considered to start from a so called equivalent bead position.

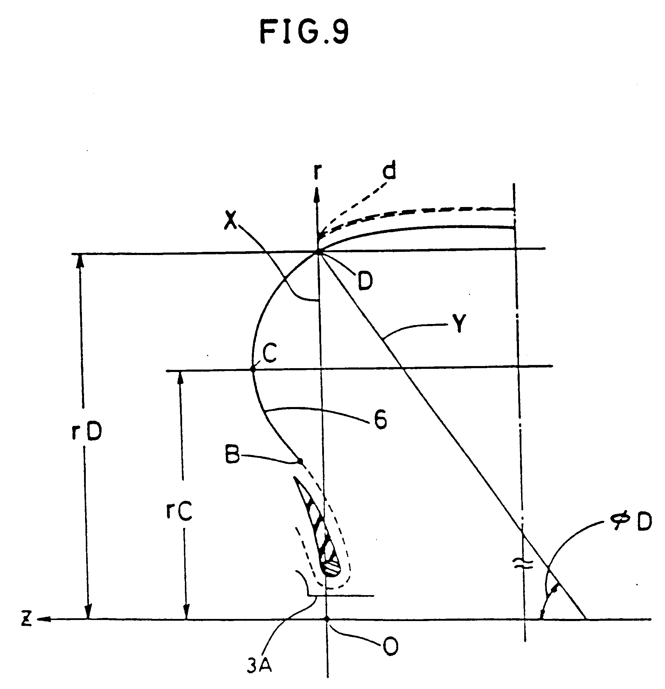

However, in radial tyres having the carcass profile depending on the theory of the spontaneously balanced shape, especially tyres in which the carcass profile is close to a circle because of a relatively high aspect ratio even when the tyre is inflated to its standard internal pressure, the radially outward deformation of the carcass 6 and between the carcass 6 and the belt 7 at the shoulder and in particular near the edge of the belt 7 is small as shown in Fig. 8. In the theory of spontaneously balanced shape, the carcass is assumed to have no elongation under inflation, but in practice, the carcass slightly extends and the carcass profile based on the theory of spontaneously balanced shape thus expands by a roughly similar figure. This means that the bonding force between the carcass 6 and the belt 7 by pressing against each other cannot be so large, and therefore the constraint between the carcass 6 and the belt 7 is inferior.

In consequence, the tension acting on the carcass 6 hardly works on the belt 7 especially around its edges, and the belt 7 thus cannot exert its hoop effect satisfactorily. This causes the tread profile in the shoulder region to become uneven, and together with the fact that the constraint by the belt 7 is not great results in uneven wear in use of the tyre thereby decreasing the wear resistance or tyre thread life.

Above all in high aspect ratio tyres, there is likely to be generated spot wear in which the tread is locally worn in portions having a small ground contact pressure and large slip on the road surface.

In addition, because the amount of the bend of belt in the radial direction while rolling is increased, the stress acting on the belt 7 is also increased, and the rolling resistance of the tyre is raised thereby worsening fuel consumption of the vehicle.

In Japanese Patent Application No 61-252485 the present applicant proposed a radial tyre for passenger cars which is improved in wear resistance, uneven wear resistance and fuel economy by increasing the amount of the radially outward movement of the shoulder portions when inflated to the standard pressure. This enlarged the radius of curvature of the tread and thereby caused the tension of the carcass 6 to act effectively on the belt 7 and increase the hoop effect of the belt 7.

Incidentally, a manufacturing method for such a radial tyre for passenger cars was proposed in the specification and drawings of Japanese Patent Application No 62-13408.

European Patent Publication No EP-A-0194108 discloses a radial tyre according to the features of the preamble of claim 1 in which the carcass profile is deliberately altered from the spontaneously balanced shape so that the radius of curvature of the tread profile increases as the internal inflation pressure increases. This tyre however exhibits a poor ground contact shape.

It is a primary object of the present invention to provide a pneumatic tyre which overcomes the above problem.

The inventors found that it was possible to make a tyre where the amount of movement at the shoulder portions of the tyre is large so that the hoop effect is enhanced in these portions to increase the constraint by the belt and give the desired effects.

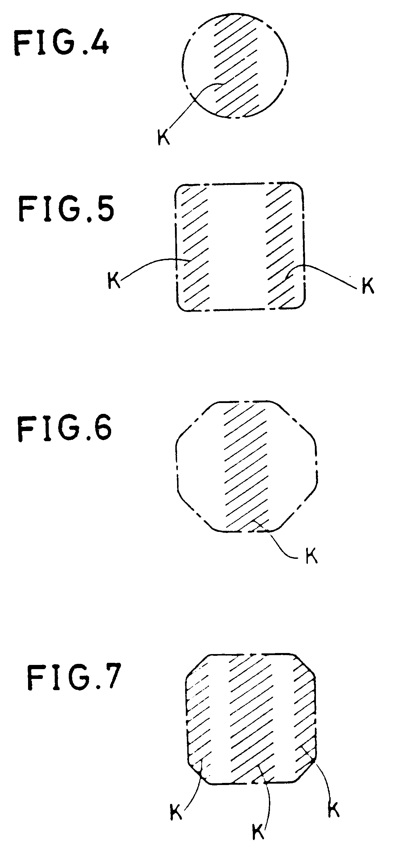

They discovered that compared to the ground contact shape of the prior art tyres which becomes almost circular as shown in Fig.4 where the portion K with a large ground contact pressure exists in the crown and is centred on the equator of the tyre, the ground contacting face of the tyre according to the invention becomes large in area and almost rectangular in shape, and the portions K,K with a large ground contact pressure exist at the side edges, that is, the shoulder regions, and the above improvements were thereby brought about.

The inventors further discovered that in order to further improve tyre performance, it was preferable to keep an appropriately strong ground contact pressure in the crown region as well as increase the ground contact pressure at the shoulder regions, and accordingly it is best to roughly even out the ground contact pressure in the tyre.

Therefore, from the viewpoint of making uniform the ground contact pressure, the present inventors continued considering the tread profile and the tread thickness at various positions, and discovered that, by designing the tread profile in a so called double radius profile in which the tread surface or face is composed of arcs having different radii of curvature between the crown region and the shoulder regions, there can be formed tyres having a relatively wide ground contact face having a roughly octangular shape and locating the portion K with a large ground contact pressure at the crown region as shown in Fig.6 and that, by combining the tread face showing the ground contact face of the Fig.6 shape and that showing the Fig.5 shape, the distribution of the ground contact pressure can be made uniform as shown in Fig.7 and thereby the tyre performance can be further improved.

It is therefore another object of the present invention to provide a highly improved pneumatic tyre in which the hoop effect is enhanced in the shoulder regions and at the same time the ground contact pressure in the ground contact face is made uniform.

According to the present invention a pneumatic tyre has a tread wherein the tread face is shaped such that a first point gap LA defined as the radial distance between a standard first point An on the tyre equator on the tread face Tn when the tyre is inflated to a standard internal pressure and a low pressure first point As on the tyre equator on the tread face Ts when the tyre is inflated to a low percentage pressure of said standard internal pressure is less than 1.00mm; a third point gap Lc defined as the radial distance between a standard third point Cn on said tread face Tn, spaced apart a distance 0.45 times the tread width TWn from said standard first point An, and a low pressure third point Cs defined as the intersection of the radial line passing through said standard third point Cn with said tread face Ts is 1.0mm to 4.0mm characterised in that the ratio LC/LA of said third point gap LC to said first point gap LA is 4.0 or more and the common logarithm log₁₀ (RCn/RSn) of the ratio RCn/RSn of a standard inner radius RCn, defined as the radius of curvature of the arc passing through said standard first point An and two standard second points Bn on the tread face Tn centred on the standard first point An and spaced apart each from the other by 0.5 times the tread width TWn when inflated to the standard internal pressure, to a standard outer radius RSn, defined as the radius of curvature of the arc passing the standard first point An and the two standard third points Cn defined one on each side thereof, is between 0.1 and 0.7; the standard inner radius RCn is 2.7 to 5.0 times of a value TWn/S obtained by dividing the tread width TWn when inflated to the standard internal pressure by the tyre aspect ratio S which is the ratio Hn/Wn of the height Hn of the tyre when inflated to the standard internal pressure to the maximum tyre width Wn; the absolute value |a-b| of the difference between the tread thickness (a) at the standard first point An and the tread thickness (b) at the standard second points Bn is 0.3mm or less, the value b-c obtained by subtracting the tread thickness (c) at the standard third point Cn from the tread thickness b is 0.5mm to 3.0mm, and a fourth point gap LE defined as the axial distance between a standard fourth point En on the sidewall face spaced 30mm from the base of bead of the tyre in the radial direction when inflated to the standard internal pressure and a low pressure fourth point ES on the sidewall face spaced 30mm from the base of the bead in the radial direction when inflated to a low percentage pressure of the standard internal pressure is 1.0mm or less, and the said low percentage pressure is 10% of the standard internal pressure.

The result of providing such a special structure is that the amount of the outward movement in the shoulder regions becomes larger than that in the crown region and the carcass pushes up the belt especially around the shoulder regions as internal pressure is increased. Accordingly, the bonding force between the carcass and the belt is increased, and hence the tensile force acting on the carcass works on the belt in particular at its edges. The hoop effect of the belt is therefore enhanced.

Also the result on the shape of the ground contact face is that the portions K, K which have a large ground contact pressure exist in the shoulders of the tyre as shown in Fig.5 and the area of the ground contact face is widened.

Accordingly, the wear resistance is raised, uneven wear such as spot wear is reduced, the fuel consumption property is improved owing to the decreased rolling resistance, wet brake performance is improved, cornering power is increased, and stability when cornering and in straight running and steering stability are improved.

In the tyre of this invention the standard inner radius RCn is set to be 2.7 times or more and 5.0 times or less of the value TWn/S obtained by dividing the tread width TWn when the standard internal pressure is applied by the aspect ratio S. This gives an optimised radius of curvature of the arc at the crown with regard to the unit tread width, that is, the standard inner radius RCn in the shape of the tread face Tn when inflated to the standard internal pressure. Further, this is the same as setting the difference between the radius at the standard first point An on the equator of the tyre and the radius at the standard third points Cn on the shoulder regions in the optimum condition. By determining this value by considering the aspect ratio S, the effects are further enhanced.

Moreover, the common logarithm of the ratio of the standard inner radius RCn to the standard outer radius RSn is in the range between 0.1 and 0.7. This causes the tyre to have a double radius profile in which the ground contact face is relatively large and the portion K with a large ground contact pressure is located in the crown region when the standard internal pressure is applied as described in Fig.6. This provides a ground contact pressure distribution almost uniform throughout the whole ground contact face as shown in Fig. 8.

The additional feature of the difference between the tread thicknesses a and b at the standard first point An and the standard second point Bn respectively is set at 0.3mm or less and the thickness b-c obtained by subtracting the tread thickness c at the standard third point Cn from the above tread thickness b is set at 0.5mm or more and 3.0mm or less reduces the tread thickness at the shoulder regions. This increases the pushing up force in the shoulders, sets the tread profile as requested and keeps the preferable double radius profile to enhance the above mentioned effects.

At the same time, the distance LE in the axial direction between the standard fourth point En and the 10% fourth point ES is set at 1.0mm or less. This prevents the increase of stiffness in the bead portions caused by inflation of the tyre, and avoids resultant worsening of ride comfort. Usually it would be expected for the ride comfort to be reduced when the hoop effect is increased by such an expansion in the shoulder regions as stated above, but in this invention the ride comfort loss is effectively prevented by setting the above value LE to be 1.0mm or less in contrast to the relatively large value in prior art tyres.

An embodiment of the present invention will now be described by way of example in detail, referring to the drawings, in which:
Fig.1. is a sectional view showing an embodiment of the present invention:
Fig.2 is a diagram showing the profile of the tyre at the standard internal pressure and at the 10% internal pressure
Fig.3 is a diagram showing the relationship between wear resistance and spot wear
Figs. 4 to 7 are diagrams roughly showing the shapes of ground contact face and the distributions of ground contact pressure;
Fig. 8 is a diagram showing the structure of a prior are tyre only by the carcass and belt;
Fig. 9 is a diagram explaining the spontaneously balanced shape; and

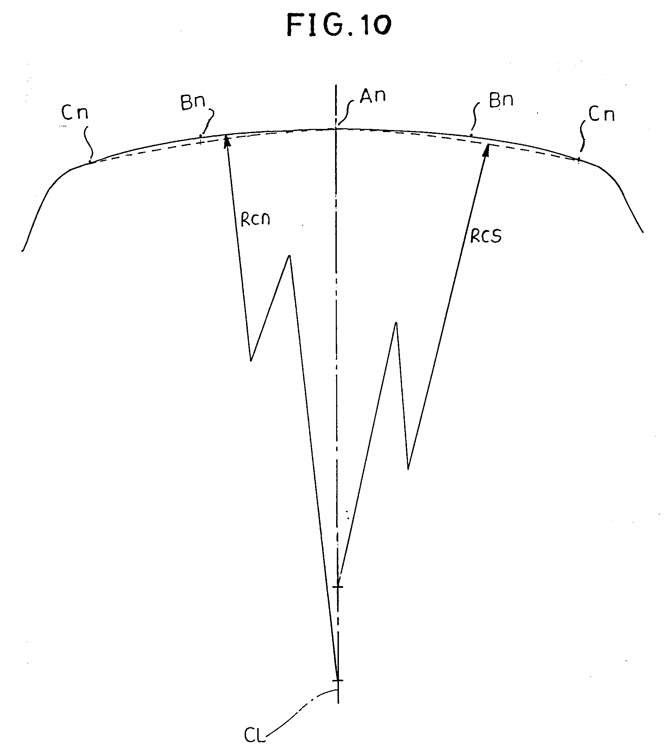

Fig. 10 is a diagram showing the standard inner and outer radii of curvature RCN and RCS respectively.

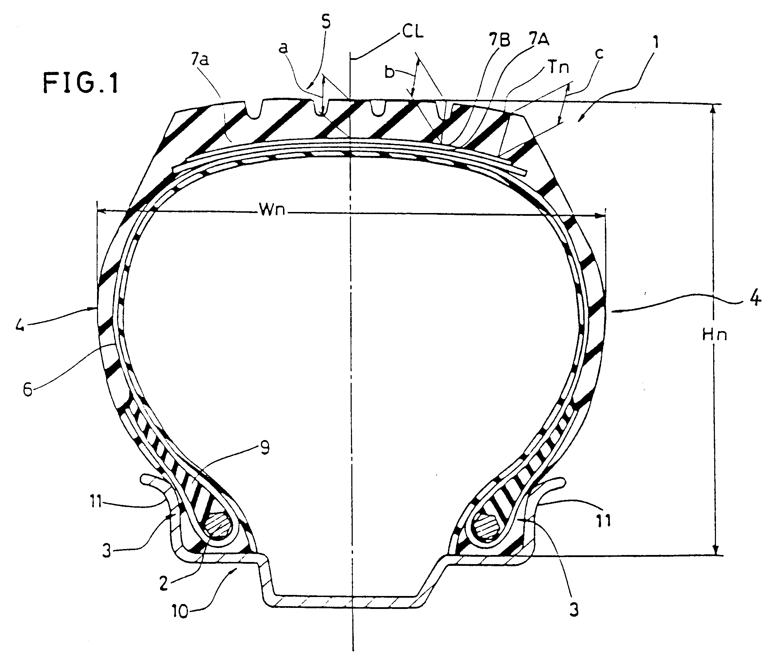

In Fig. 1 a pneumatic tyre 1 is mounted on a standard rim 10 and inflated with air to its standard internal pressure of 2.1 kg/cm². The tyre 1 has a pair of beads 3 through each of which a bead core 2 passes, sidewall portions 4 extending radially outwardly from each bead 3, and a tread 5 extending between the edges of the sidewall portions 4. A reinforcement carcass 6 turned up around the bead cores 2 from the inside to the outside is provided which has its main portion extending through the sidewall portions 4 and the tread portion 5. In the tread 5 a belt 7 is disposed outside the carcass 6. In each bead 3 there is a bead apex 9.

The carcass 6 is composed of cords arranged radially at 80 to 90 degrees to the equator CL of the tyre. For the carcass cord, organic fibre cord such as nylon, polyester, rayon or aromatic polyamide are employed. Inorganic fibre cords such as metals can also be used. The carcass 6 may be one or more plies of cords.

The belt 7 is composed of two plies a first ply 7A disposed adjacent the carcass 6 and second ply 7B thereabove, both first and second plies 7A and 7B are made of metal cords inclined in opposite directions with respect to the tyre equator CL at relatively small angles to the tyre equator CL. The first ply 7A is wider than the second ply 7B, and both edges of the first ply 7A are extended downwards of the tread edges where the sidewall portions 4 and the tread portion 5 intersect.

The tyre 1 is formed in a slightly depressed shape and has an aspect ratio which is the ratio of the height Hn of the tyre, which is the distance from the bottom of the bead 3 to the highest point of the tread Tn that is generally the standard first point on the equator CL of the tyre on the tread face Tn when inflated to the standard internal pressure, to the tyre maximum width Wn is less than 1, for example, about 0.9.

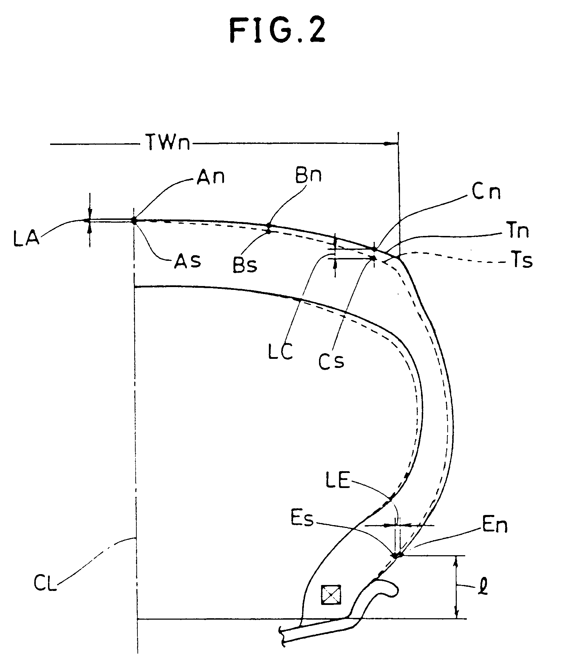

In Fig.2 the profile of the tyre 1 when inflated to its standard internal pressure is shown by a solid line, and that when inflated to 10% of the standard internal pressure (called 10% internal pressure hereinafter) is shown by a broken line and the point on the tyre equator on the tread face Tn when inflated to the standard internal pressure is defined as the standard first point An. In addition the points Bn on the tread face Tn which are spaced from each other by 0.5 times of the tread width TWn and centered on the standard first point An are defined as the standard second points Bn, and the points Cn on the tread face Tn which are spaced from each other by 0.9 times of the tread width TWn and centered on the standard first point An are defined as the standard third points Cn. Moreover, the point As on the tyre equator on the tread face Ts when inflated to 10% internal pressure is defined as the 10% first point As, the point Bs where a radial line passing each standard second point Bn crosses with the tread face Ts is defined as 10% second point Bs and the point Cs where a radial line passing the standard third point Cn crosses with the tread face Ts is defined as 10% third point Cs.

In the tyre 1, the first point gap LA which is the distance between the standard first point An and the 10% first point As is set at less than 1.0mm. Furthermore, the third point gap LC which is the distance between the standard third point Cn and the 10% third point Cs is set to be 1.0mm to 4.0mm and the ratio LC/LA of the third point gap LC to the first point gap LA is 4.0 or more.

As described above, in the crown region defined between the standard second points Bn and centered on the standard first point An, the amount of the expansion from the tread face Ts to Tn by the inflation from 10% to 100% of the standard internal pressure is set to be small. To the contrary, the amount of the radially outward movement in the shoulder regions around the standard third points Cn, that is, the third point gap LC is large.

Consequently, the carcass 6 substantially pushed up the belt 7 around its edges as internal pressure is increased, which increases the bonding force between the carcass 6 and the belt 7. Therefore, the tensile force acting on the carcass 6 is effective upon the belt 7 particularly in its edges. As a result the hoop effect of the belt 7 is effective and efficiently enhanced by the pressure. Accordingly, the ground contact face makes a relatively large approximately rectangular shape as shown in Fig 5 and the portion K with a large ground contact pressure is located in the shoulder regions.

This reduces wear and lessens uneven wear including shoulder wear and spot wear.

In addition an improvement in the fuel economy results due to a reduction of the rolling resistance and the wet brake performance is improved.

Moreover, the steering stabilities such as steering wheel response, cornering power, cornering stability and straight dive stability are improved.

Returning now to considering the first point gap LA, this invention includes a change or movement where the standard first point An becomes located radially inwardly of the 10% first point As.

Note that the if the ratio LS/LA of the third point gap LC to the first point gap LA is less than 4.0, the operation and effects described above are not obtained.

Meanwhile, the radius of curvature of the arc passing through the standard first point An and the two standard second points Bn is defined as the standard inner radius RCn, and the radius of curvature of the arc passing through the standard first point An and the two standard third points Cn is also defined as the standard outer radius RSn and then the common logarithms log₁₀ (RCn/RSn) of the ratio RCn/RSn of the standard inner radius RCn to the standard outer radius RSn is set between 0.1 and 0.7 whereby the ratio RCn/RSn is in a range between 1.36 and 5.01.

In this way, by setting the standard outer radius RSn smaller than the standard inner radius in the range of the above ratio, the curvature of the arc passing the shoulder region is made large.

Accordingly, the crown region and the shoulder regions of the tread face Tn are formed in an arc with a larger radius of curvature and an arc with a smaller radius of curvature, respectively.

That is, the tread profile has a so called double radius profile.

This is one of the conditions necessary to give the ground contact face an octangular shape and to locate the position K with a large ground contact pressure in the crown region as shown in Fig.6, and by adding this condition to those described above, it becomes possible to obtain a tread shape in which the ground contact pressure is distributed uniformly as shown in Fig.7.

This still further improves the wear resistance and steering stability.

The reason why the common logarithm log₁₀ (RCn/RSn) is set at 0.1 or more is that the above features of the double radius profile cannot be exerted when the value is less than 0.1. To the contrary, when it is over 0.7, the standard outer radius RSn becomes excessively smaller than the standard inner radius RCn, and the radius of curvature of the arc at the shoulder regions is decreased, and as a result, the shoulder regions contact insufficiently with the ground.

It is preferable to alter this value according to the aspect ratio S. When the aspect ratio is over 0.8, the value is preferably set between 0.10 and 0.40 when the aspect ratio S is over 0.6, the value is preferably set between 0.25 and 0.55, and when the aspect ratio S is 0.6 or less, the value is preferably set between 0.35 and 0.65.

The reason why the radius RCn/RSn should be set larger as the aspect ratio becomes smaller, that is, the tyre is more depressed is that the tyre width Wn relatively increases in comparison with the tyre height Hn by the depression, and which causes an increase in the deflection at the tread face Tn when contacting the ground, and thereby the shoulder region can contact the ground easily.

The standard inner radius RCn is set at 2.7 to 5.0 the value TWn/S obtained by dividing the tread width TWn by the tyre aspect ratio S.

By limiting the standard inner radius RCn to the above range, the tread face Tn is formed appropriately, and the amount of the outward movement of the shoulder portions is increased, thereby enhancing the hoop effect in the shoulder regions.

This value, meanwhile determines the standard inner radius RCn with regard to the particular tread width TWn, and furthermore the value qualitatively determines the radius with regard to the tread width per unit length, that is, the difference in radius between the standard third point Cn and the standard first point An. By adjusting this value depending on the aspect ratio S, the amount of the outward movement of the shoulder portion due to the inflation to the standard internal pressure is increased to contribute to the improvement of the hoop effect at the shoulder regions, and to form the tread face Tn in the most appropriate shape.

When the value is less than 2.7 the standard outer radius RSn to the tread width becomes small, and the amount of the outward movement of the shoulder portion tends to become excessively large, and ground contact in the shoulder region becomes difficult.

When the value is larger than 5.0, to the contrary, the tread face becomes excessively flat and the ground contact pressure in the shoulder becomes too high.

Concerning the particular distribution of the tread thickness the absolute value |a-b| of the difference between the tread thickness a at the standard first point An and the tread thickness b at the standard second point Bn is 0.3mm or less, and
the thickness b-c obtained by subtracting the tread thickness c at the standard third point Cn from the tread thickness b is in the range from 0.5mm to 3.0mm, and more preferably from 1.3mm to 3.0mm.

In this way, the tread thicknesses a and b should be almost the same having 0.3mm or less for the absolute value of their difference. The value of b-c however, is between 0.5mm and 3.0mm and by selecting the tread thickness c at the standard third point Cn in this way increases the amount of the outward movement of the shoulder portions under inflation thereby forming the tread face into the desirable double radius profile.

Note that the tread thicknesses are each the thickness measured from the tread face Tn to the upper surface of the upper belt ply 7A at right angles to the tread face Tn.

If b-c is less than 0.5mm the effect is not obtained and if it is over 3.0mm, the strength at the shoulder is lessened which affects durability as well as giving too much outward movement which makes it difficult to form the proper double radius profile.

Such a tyre 1 shape can be manufactured by utilising a vulcanising mould having a middle swollen shape which therefore purposely violates the theory of spontaneously balanced shape.

By the theory of spontaneously balanced shape, the carcass profile is obtained from the following equation. 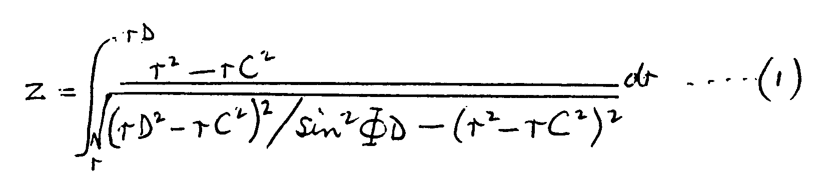
where, as shown in Fig.9.
- D:: an intersection of a perpendicular X extending from the edge d of the belt 7 in the radial direction and rectangular to the axle Z, that is, the Z-axis in this embodiment, with the carcass 6,
- C:: point where the carcass is in the maximum width,
- r:: the height from the Z-axis in the radial direction of the tyre (r-axis in this embodiment)
- rC:: the height from the Z-axis to the point C on the carcass 6 in the radial direction,
- rD:: the height from the Z-axis to the intersection
- D: on the carcass 6 in the radial direction, and
- ΦD:: an angle formed by a normal line Y to the carcass at the intersection D and the Z-axis.

The Z-axis can be replaced by a line horizontally passing the bead base 3A. On the assumption that the carcass 6 makes an arc at least near the edge of the belt 7, the Equation (1) is obtained by regarding the intersection 0 of the Z-axis with the r-axis passing the intersection D as the origin.

Accordingly, by giving the height r, the deviation from the r-axis in the horizontal direction, that is, the value Z can be calculated, and a curve depending on the theory of spontaneously balanced shape can be obtained.

In the theory of the spontaneously balanced shape, as apparent from equation (1), when the locations at the heights rC and rD and the angle ΦD are given, the line is determined. Here, if the value z at the point C is given then by choosing either one of the angle ΦD or the height rC, the other can be obtained.

However, in the tyre 1 of the present invention, the height in the radial direction from the bead base 3A to the location C where the carcass of the moulded tyre 1 in a vulcanising mould becomes widest, is set less than the height required by using the calculations of the theory of spontaneously balanced shape, so that the carcass profile is formed in a shape swollen in the lower part.

This height is limited in a range from 35% to 55% of the height of the moulded tyre, and further the maximum width of the carcass 6 is also made longer than the maximum width given by the theory of the spontaneously balanced shape by a ratio of between 1 and 1.1.

The tyre 1 of the present invention is thus produced by departing from the spontaneously balanced shape.

Besides, in the tyre of this embodiment, the point on the sidewall spaced 30mm (distance 1) from the lower end of the bead which is the reference for the rim radius in the radial direction, is defined as a standard fourth point En when inflated to the standard internal pressure, and defined as a 10% fourth point ES when inflated to the 10% internal pressure.

The distance between these two points En and Es in the axial direction is made to be 1.0mm or less.

Accordingly, the ride comfort which tends to be decreased by the increase in the stiffness of the tyre caused by any large outward movement of the shoulder portions, is not so affected.

Test tyres of size 5.60 R13 having the structure shown in Figs.1 and 2 were made by way of trial according to the specifications shown in Table 1. The tyres were mounted on a 4-J x 13 rim.

The belt 7 used was composed of two plies of steel cords, and the carcass was composed of one ply of polyester cords.

The dimension at the points including the standard first point An, the standard third point Cn and the 10% first point As to the 10% third point Cs were measured from drawings showing sectional contours of the tyre when inflated to its standard internal pressure and to its 10% internal pressure plotted using a laser deviation measuring instrument.

The tread thickness a, b, & c were measured by cutting the tyre afterwards.

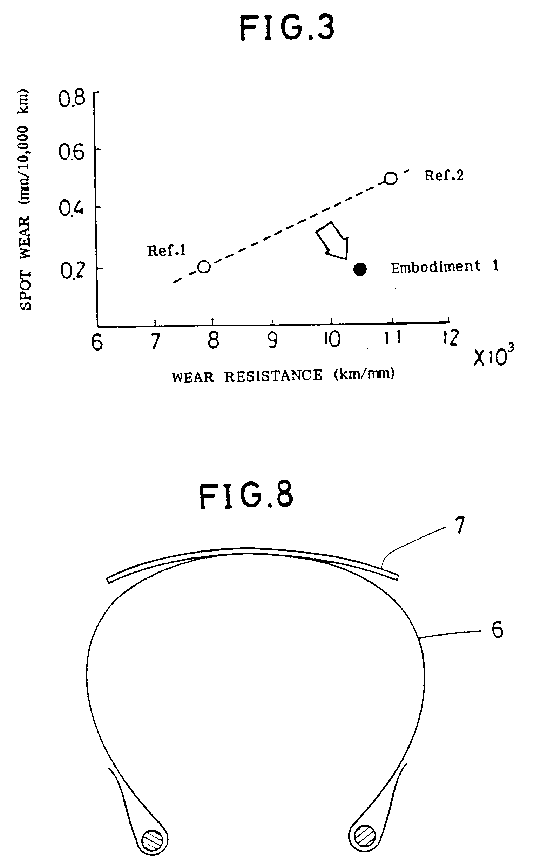

The test results obtained by mounting the tyres on the rear wheel of an 1800 cc FF car with toe-in of 4mm and driving for 50,000 km are shown in Fig.3. It was found that, in embodiment 1, the runable distance per unit thickness was relatively long, and that the spot wear index was low.

In addition, the rolling resistance was measured by using a drum. The resistance (kg) was measured by rotating the drum at the speed corresponding to a driving speed of 80 km/h, and expressed as an index assuming the value of Reference 1 as 100. In this expression, the smaller the value, the smaller the rolling resistance. It is clearly that, in Embodiment 1, the rolling resistance was small as shown in Table 1, and the fuel economy was improved compared to the reference.

Moreover, the wet brake performance was examined by mounting four tyres on an 1500 cc FF car, and driving on a paved road at a speed of 60 km/h, and measuring the stopping distance when the tyres were locked. The stopping distance was expressed by an index regarding that in Reference 1 as 100.

Embodiment 1 was superior in this test as shown in Table 1.

A second batch of test tyres of size 205/60R14 87H were produced according to the specification shown in Table 2, and these tyres were mounted on 5 1/2 JJ x 14 rims. The rolling resistance and wet brake performances were measured in the same way to the above. The resultant data are shown in Table 2. The wet brake performances were measured by using a 2000 cc FR type car.

Furthermore, the steering wheel response, cornering limit, stability at the cornering limit, stability in straight high speed running were evaluated through the driver's feel by mounting the tyres on a 2000 cc FF type car and driving in the test course.

The results are compared by an index based on the assumption that Reference 1 is 3 and where larger values express better results. From the results, it is found out Embodiment 2 showed superior data in either test.

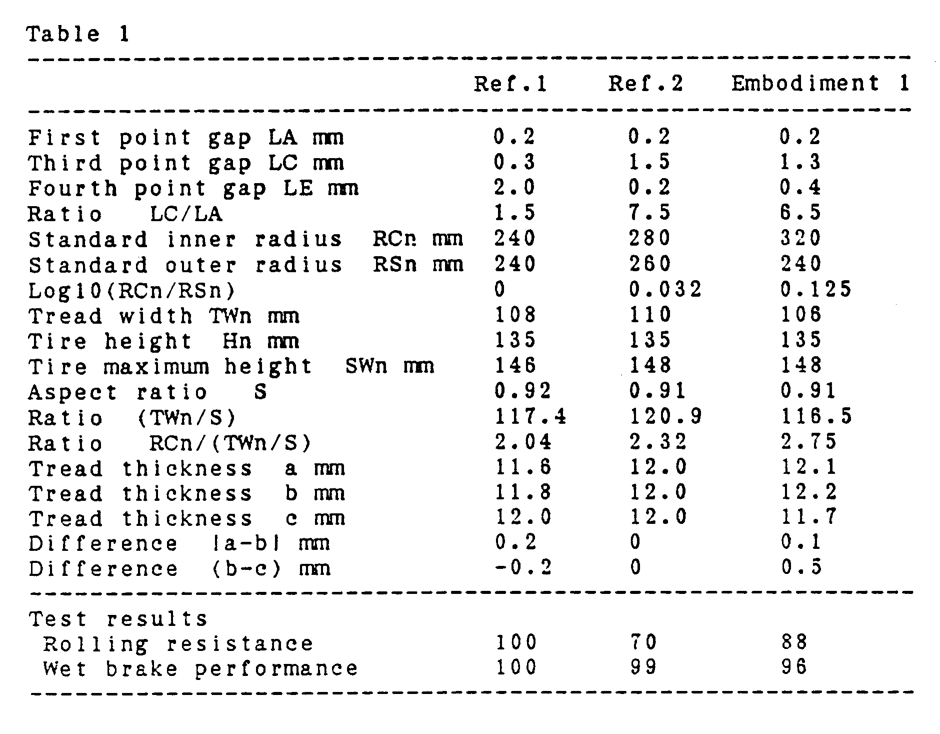

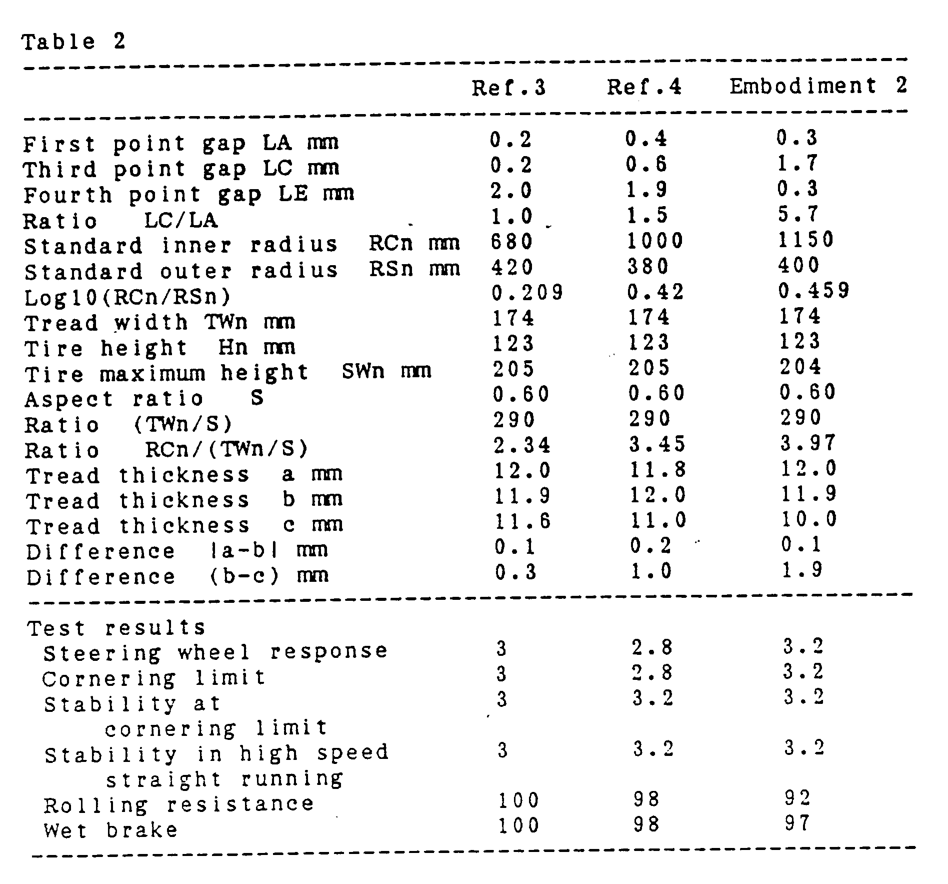

Thus for the tyre of the invention the amount of outward movement of the shoulder portions on inflation is larger than that of the crown, and the carcass then pushes against the belt especially in the shoulder regions which causes as increase in the bonding force between the carcass and the belt. Accordingly, the tensile force in the carcass acts on the belt, and the hoop effect of the belt is enhanced.

The shape of the ground contact face is also improved in that the portions K having a large ground contact pressure exist in the shoulder regions of the tyre as shown in Fig.5 and the area of the ground contact face is widened. Accordingly, wear resistance is improved, uneven wear such as spot wear is reduced, the fuel consumption is improved owing to the decrease of the rolling resistance, wet brake performance is enhanced, cornering performance is strengthened, and steering stability, both stability when cornering and stability when running straight are improved.

From the second aspect, where the standard inner radius RCn is between 2.7 and 5.0 times the value TWn/S, the radius of curvature of the arc of the shoulder portions with regard to the unit tread width, that is, the standard outer radius RCn in the shape of the tread face Tn when inflated to standard internal pressure is optimised. This is equivalent to setting the difference in the radii between the standard first point An on the equator of the tyre and the standard third point Cn on the shoulder region. By determining this value and including the aspect ratio S effect the operation and effects brought by the above first aspect of the invention are enhanced.

Moreover, when the common logarithm of the ratio of the standard inner radius RCn to the standard outer radius RSn is in the range between 0.1 and 0.7 the result is to add the condition which leads to the ground contact face becoming relatively large in the double radius profile. Then the portion K with a large ground contact pressure is located in the crown region when the standard internal pressure is applied as described in Fig.6. By the addition of this condition, the ground contact pressure distribution is made almost uniform throughout the whole ground contact face as shown in Fig.8.

Finally when the difference between the tread thicknesses a and b at the standard first point An and standard second point Bn respectively is set at 0.3mm or less and b-c is set at 0.5mm to 3.0mm the pushing up force of the shoulder is again increased, the shape of tread face is set most appropriately and the preferable double radius profile is kept, thereby maximising the above effects.

## Claims

1. A pneumatic tyre having a tread (5) wherein the tread face is shaped such that a first point gap LA defined as the radial distance between a standard first point An on the tyre equator on the tread face Tn when the tyre is inflated to a standard internal pressure and a low pressure first point As on the tyre equator on the tread face Ts when the tyre is inflated to a low percentage pressure of said standard internal pressure is less than 1.00mm; a third point gap Lc defined as the radial distance between a standard third point Cn on said tread face Tn, spaced apart a distance 0.45 times the tread width TWn from said standard first point An, and a low pressure third point Cs defined as the intersection of the radial line passing through said standard third point Cn with said tread face Ts is 1.0mm to 4.0mm characterized in that the ratio LC/LA of said third point gap LC to said first point gap LA is 4.0 or more and the common logarithm log₁₀ (RCn/RSn) of the ratio RCn/RSn of a standard inner radius RCn, defined as the radius of curvature of the arc passing through said standard first point An and two standard second points Bn on the tread face Tn centred on the standard first point An and spaced apart each from the other by 0.5 times the tread width TWn when inflated to the standard internal pressure, to a standard outer radius RSn, defined as the radius of curvature of the arc passing the standard first point An and the two standard third points Cn defined one on each side thereof, is between 0.1 and 0.7; the standard inner radius RCn is 2.7 to 5.0 times of a value TWn/S obtained by dividing the tread width TWn when inflated to the standard internal pressure by the tyre aspect ratio S which is the ratio Hn/Wn of the height Hn of the tyre when inflated to the standard internal pressure to the maximum tyre width Wn; the absolute value |a-b| of the difference between the tread thickness (a) at the standard first point An and the tread thickness (b) at the standard second points Bn is 0.3mm or less, the value b-c obtained by subtracting the tread thickness (c) at the standard third point Cn from the tread thickness b is 0.5mm to 3.0mm, and a fourth point gap LE defined as the axial distance between a standard fourth point En on the sidewall face spaced 30mm from the base of bead (3) of the tyre in the radial direction when inflated to the standard internal pressure and a low pressure fourth point ES on the sidewall face spaced 30mm from the base of the bead (3) in the radial direction when inflated to a low percentage pressure of the standard internal pressure is 1.0mm or less, and the said low percentage pressure is 10% of the standard internal pressure.

## Patentansprüche

1. Luftreifen mit einem Laufstreifen (5), bei dem die Laufstreifenfläche so geformt ist, daß ein erster Punktabstand LA, definiert als der radiale Abstand zwischen einem ersten Standardpunkt An am Reifenäquator an der Laufstreifenfläche TN bei auf einen Standard-Innendruck aufgepumptem Reifen und einem ersten Niederdruckpunkt AS an dem Reifenäquator an der Laufstreifenfläche Ts bei auf einen niederen Anteil des Drucks des standardmäßigen Innendrucks aufgepumptem Reifen weniger als 1,00 mm beträgt; ein dritter Punktabstand Lc, definiert als der radiale Abstand zwischen einem dritten Standardpunkt Cn an der Laufstreifenfläche Tn, mit einem Abstand vom 0,45-fachen der Laufstreifenbreite TWn von dem ersten Standardpunkt An, und einem dritten Niederdruckpunkt Cs, definiert als die Überschneidung der durch den dritten Standardpunkt Cn hindurchgehenden radialen Linie mit der Laufstreifenfläche Ts, 1,0 mm bis 4,0 mm beträgt, dadurch gekennzeichnet, daß das Verhältnis LC/LA des dritten Punktabstandes LC zu dem ersten Punktabstand LA 4,0 oder mehr beträgt und der Zehner-Logarithmus log₁₀ (RCn/RSn) des Verhältnisses RCn/RSn eines Standard-Innenradius RCn, definiert als der Krümmungsradius des durch den ersten Standardpunkt An und zwei an dem ersten Standardpunkt zentrierte und voneinander durch das 0,5-fache der Laufstreifenbreite TWn getrennte zweite Standardpunkte Bn an der Laufstreifenfläche hindurchgehenden Bogens bei auf den Standard-Innendruck aufgepumptem Zustand, zu einem Standard-Außenradius RSn, definiert als der Krümmungsradius des durch den ersten Standardpunkt An und die beiden zu beiden Seiten von jenem definierten dritten Standardpunkte Cn hindurchtretenden Bogens zwischen 0,1 und 0,7 liegt; der Standard-Innenradius RCn das 2,7 bis 5,0-fache eines Wertes TWn/S beträgt, der erhalten wird beim Dividieren der Laufstreifenbreite TWn bei auf Standard-Innendruck aufgepumpten Reifen durch das Reifenquerschnitts-Verhältnis S, das das Verhältnis Hn/Wn der Höhe Hn des auf den Standard-Innendruck aufgepumpten Reifens zur maximalen Reifenbreite Wn ist; wobei der Absolutwert |a-b| der Differenz zwischen der Laufstreifendicke (a) an dem ersten Standardpunkt An und der Laufstreifendicke (b) an den zweiten Standardpunkten Bn 0,3 mm oder weniger beträgt, und der Wert b-c, der erhalten wird durch Abziehen der Laufstreifendicke (c) an dem dritten Standardpunkt Cn von der Laufstreifendicke b, 0,5 mm bis 3,0 mm beträgt, und ein vierter Punktabstand LE, definiert als der Axialabstand zwischen einem vierten Standardpunkt En an der Seitenwandfläche in einem Abstand von 30 mm von der Basis des Wulstes (3) des Reifens in der radialen Richtung, wenn dieser auf den Standard-Innendruck aufgepumpt ist, und einem vierten Niederdruckpunkt ES an der Seitenwandfläche im Abstand von 30 mm von der Basis des Wulstes (3) in der radialen Richtung, wenn er auf einen niedrigen Anteildruck des Standard-Innendrucks aufgepumpt ist, 1,0 mm oder weniger beträgt und der niedrige Anteil des Drucks 10% des Standard-Inenndrucks beträgt.

## Revendications

1. Pneumatique comprenant une bande de roulement (5), dans lequel la face de la bande de roulement a une configuration telle qu'un premier espace LA entre des points, défini comme étant la distance radiale entre un premier point nominal An sur l'équateur du pneumatique à la face Tn de la bande de roulement lorsque le pneumatique est gonflé à la pression interne nominale et un premier point à basse pression As placé sur l'équateur du pneumatique à la face Ts de la bande de roulement lorsque le pneumatique est gonflé à une pression correspondant à un petit pourcentage de la pression interne nominal est inférieur à 1,00 mm, un espace Lc de troisièmes points défini comme étant la distance radiale comprise entre un troisième point nominal Cn placé sur la face de la bande de roulement Tn à une distance de 0,45 fois la largeur TWn de la bande de roulement par rapport au premier point nominal An et un troisième point à basse pression Cs défini comme étant l'intersection de la droite radiale passant par le troisième point nominal Cn avec la face Ts de la bande de roulement est compris entre 1,0 et 4,0 mm, caractérisé en ce que le rapport LC/LA du troisième espace entre points LC au premier espace entre points LA est supérieur ou égal à 4,0 et le logarithme ordinaire log₁₀(RCn/RSn) du rapport RCn/RSn du rayon interne nominal RCn, défini comme étant le rayon de courbure de l'arc passant par le premier point nominal An et deux seconds points nominaux Bn de la face Tn de la bande de roulement, centrés sur le premier point nominal An et séparés l'un de l'autre par 0,5 fois la largeur TWn de la bande de roulement lorsque le pneumatique est gonflé à la pression interne nominale, au rayon externe nominal RSn, défini comme étant le rayon de courbure de l'arc passant dans le premier point nominal An et les deux troisièmes points nominaux Cn définis de part et d'autre de ce point, est compris entre 0,1 et 0,7, le rayon interne nominal RCn est compris entre 2,7 et 5,0 fois la valeur TWn/S obtenue par division de la largeur TWn de la bande de roulement, lorsque le pneumatique est gonflé à la pression interne nominale, et du rapport d'allongement S du pneumatique, ce rapport étant le rapport Hn/Wn de la hauteur Hn du pneumatique gonflé à la pression interne nominale à la largeur maximale Wn du pneumatique, la valeur absolue |a - b| de la différence entre l'épaisseur (a) de la bande de roulement au premier point nominal An et l'épaisseur (b) de la bande de roulement aux seconds points nominaux Bn est inférieure ou égale à 0,3 mm, la valeur b - c obtenue par soustraction de l'épaisseur de la bande de roulement (c) au troisième point nominal Cn de l'épaisseur b de la bande de roulement est comprise entre 0,5 et 3,0 mm, et un quatrième espace LE, défini comme étant la distance axiale comprise entre un quatrième point nominal En de la face du flanc à 30 mm de la base du talon (3) du pneumatique dans la direction radiale, lorsque le pneumatique est gonflé à la pression interne nominale, et un quatrième point ES à basse pression de la face du flanc placée à 30 mm de la base du talon (3) dans la direction radiale lorsque le pneumatique est gonflé à un petit pourcentage de la pression interne nominale, est inférieur ou égal à 1,0 mm, ce faible pourcentage de la pression correspondant à 10 % de la pression interne nominale.
